Europäisches Patentamt

European Patent Office

Office européen des brevets

(11) Veröffentlichungsnummer: **0 303 940**
**A1**

(12) **EUROPÄISCHE PATENTANMELDUNG**

(21) Anmeldenummer: **88112904.3**

(22) Anmeldetag: **08.08.88**

(51) Int. Cl.⁴: **H04N 1/40**

(30) Priorität: **19.08.87 DE 3727695**

(43) Veröffentlichungstag der Anmeldung:
**22.02.89 Patentblatt 89/08**

(84) Benannte Vertragsstaaten:
**DE FR GB NL**

(71) Anmelder: **Heimann GmbH**
**Weher Köppel 6**
**D-6200 Wiesbaden 1(DE)**

(72) Erfinder: **Dennhoven, Manfred, Dipl.-Ing.**
**Kastanienweg 13**
**D-5421 Osterspai(DE)**
Erfinder: **Fichtner, Frank, Dipl.-Ing.**
**Am Schmittrain 12**
**D-6501 Uelversheim(DE)**

(74) Vertreter: **Mehl, Ernst, Dipl.-Ing. et al**
**Postfach 22 13 17**
**D-8000 München 22(DE)**

(54) **Zeilenförmiger Bildaufnahmesensor.**

(57) Bei einem zeilenförmigen Bildaufnahmesensor zum Abtasten einer optischen Information durch Relativbewegung zwischen dem Informationsträger und dem Bildaufnahmesensor, der von Photodioden (5, 6) gebildet ist, soll eine Differenzsignalbildung zweier in Bewegungsrichtung benachbarter Bildpunktinformationen in einfacher Weise erfolgen.

Es sind zwei parallele Reihen von Photodioden (5, 6) vorhanden, die senkrecht zur Bewegungsrichtung (16) liegen. Zwei benachbarte Photodioden (5, 6) der beiden Reihen besitzen eine gemeinsame Elektrode (17), an der das der nachfolgenden Signalaufbereitungsschaltung (10, 11, 12) zugeführte Differenzsignal der Beleuchtung der beiden benachbarten Photodioden (5, 6) abgegriffen ist.

FIG 1

## Zeilenförmiger Bildaufnahmesensor

Die Erfindung betrifft einen zeilenförmigen Bildaufnahmesensor zum Abtasten einer optischen Information durch Relativbewegung zwischen dem Informationsträger und dem Bildaufnahmesensor, mit Photodioden, denen eine Signalaufbereitungsschaltung nachgeschaltet ist.

Ein Bildaufnahmesensor dieser Art ermöglicht das Lesen einer optischen Information und das Wandeln in eine analoge elektrische Information, wahlweise den Transport der analogen elektrischen Information mit anschließender elektrischer Verstärkung oder das Wandeln der analogen elektrischen Information in eine digitale elektrische Information und damit das Sortieren und Speichern der Information. Die analog aufbereitete oder die digital geordnete und gespeicherte Information kann dann für alle Formen der Bildverarbeitung und Bildwiedergabe (z.B. Fernkopieren, Bildschirmwiedergabe) nutzbar gemacht werden.

Es sind Bildaufnahmesensoren in Siliziumtechnik bekannt. Die aufzunehmende Information wird dabei auf die Photodioden des Bildaufnahmesensors, die Bildpunkte definieren, abgebildet. Durch die Relativbewegung senkrecht zur Zeilenachse erfolgt eine flächige Bildaufnahme. Dabei ist es zweckmäßig, eine Differenzsignalbildung durchzuführen, bei der das jeweils entstehende Signal der Photodiodenzeile ausgelesen und mit dem Signal der vorausgegangenen Auslesung, die in einem Speicher analog oder digital abgelegt ist, bildpunktweise verrechnet wird. Das Ergebnis, die Differenz der Bildpunktinformationen der aktuellen Auslesung und der vorangehenden Auslesung, wird weiterverarbeitet.

Der Erfindung liegt die Aufgabe zugrunde, einen zeilenförmigen Bildaufnahmesensor der eingangs genannten Art so auszubilden, daß bei geringem Informationsfluß bei der Bildaufnahme eine Aufbereitung der Differenzsignale der Bildpunktinformationen zweier aneinander angrenzender Bildzeilen erfolgt.

Diese Aufgabe ist erfindungsgemäß dadurch gelöst, daß zwei parallele Reihen von Photodioden vorhanden sind, die senkrecht zur Bewegungsrichtung liegen, und daß zwei benachbarte Photodioden der beiden Reihen eine gemeinsame Elektrode besitzen, an der das der Signalaufbereitungsschaltung zugeführte Differenzsignal der Beleuchtung der beiden benachbarten Photodioden abgegriffen ist. Bei dem erfindungsgemäßen Bildaufnahmesensor erfolgt die Differenzbildung der Signale der einzelnen Photodioden zweier aufeinanderfolgender Zeilen direkt mit Hilfe einer Doppelbildpunkt-Photodiode. Eine Doppelbildpunkt-Photodiode wird durch zwei Photodioden, die senkrecht zur Zeilenrichtung angeordnet sind und eine gemeinsame Elektrode besitzen, gebildet. An dieser gemeinsamen Elektrode liegt, wenn die beiden Photodioden entgegengesetzt in bezug auf die gemeinsame Elektrode vorgespannt sind, direkt das Differenzsignal zweier senkrecht zur Zeilenrichtung benachbarter Photodioden, die zwei geometrisch senkrecht zur Zeilenrichtung aufeinanderfolgenden Bildpunkten entsprechen.

Eine zweckmäßige Ausgestaltung der Erfindung besteht darin, daß eine Elektrodenmatrix mit zwei Zeilenelektroden und einer Reihe von Spaltenelektroden vorhanden ist, wobei zwischen den Zeilenelektroden und den Spaltenelektroden eine Halbleiterschicht liegt, die zwischen den Zeilenelektroden und den Spaltenelektroden zwei Photodioden bildet.

Die Erfindung ist nachfolgend anhand eines in der Zeichnung dargestellten Ausführungsbeispieles näher erläutert. Es zeigen:

Fig. 1 das Schaltbild eines Bildaufnahmesensors nach der Erfindung, und

Fig. 2 eine Ausführungsform eines Bildaufnahmesensors mit zwei parallelen Photodiodenreihen nach der Erfindung.

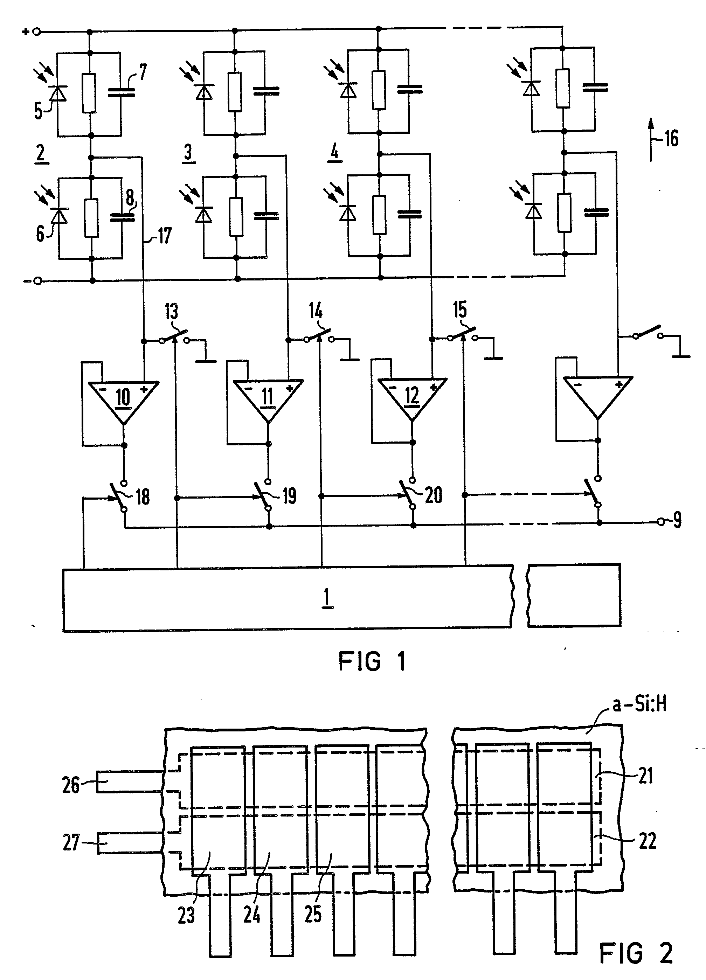

In der Fig. 1 ist ein Schieberegister 1 dargestellt, mit dessen Hilfe jeder einzelne lichtelektrische Wandler 2, 3, 4 usw. seriell angesteuert wird. Ein Wandler 2, 3, 4 usw. weist zwei Photodioden mit jeweils einer ihr eigenen Parallelkapazität auf. Für den Wandler 2 sind die Photodioden mit 5, 6 und die Parallelkapazitäten mit 7, 8 bezeichnet. Mit Hilfe des Schieberegisters 1 wird der Entladezustand der Wandler 2, 3, 4 usw. nach der Integrationszeit an den gemeinsamen Signalausgang 9 von Verstärkern 10, 11, 12 usw. von denen für jeden Wandler 2, 3, 4 usw. (Bildpunkt) jeweils einer vorhanden ist, weitergegeben. Sobald der Verstärker 10, 11, 12 usw. des nächsten Wandlers 2, 3, 4 usw. an den Ausgang angeschaltet wird, erfolgt die Rücksetzung des vorhergehenden Wandlers in den Ausgangszustand mit Hilfe von Schaltern 13, 14, 15 usw. und es beginnt eine neue Integrationsphase.

Die Fig. 1 zeigt, daß jeder Wandler 2, 3, 4 usw. zwei parallele Reihen von Photodioden 5 usw. bzw. 6 usw. aufweist, die senkrecht zur Bewegungsrichtung 16 liegen. Zwei benachbarte Photodioden, z.B. 5, 6 der beiden Reihen besitzen eine gemeinsame Elektrode, z.B. 17, an der das der nachgeschalteten Signalaufbereitungsschaltung zugeführte Differenzsignal der Beleuchtung der beiden benachbarten Photodioden 5, 6 abgegriffen ist. Jeweils zwei benachbarte Photodioden, z.B. 5, 6 sind gemäß Fig. 1 an entgegengesetzten Versorgungspotentialen, bezogen auf die gemeinsame Elektrode 17, angeschlossen, so daß am Ende einer Integrationsperiode beim Schließen des zugeordneten Schalters, z.B. 13, beide Photodioden 5, 6 in den Ausgangszustand zurückgesetzt werden. Je nach Intensität findet in jeder der beiden Photodioden 5, 6 usw. ein Ladungsausgleich statt. Dieser Ladungsausgleich bewirkt eine Spannungsänderung an der gemeinsamen Elektrode 17 gegenüber dem Rücksetzpotential. Diese Spannungsänderung wird über den zugeordneten Verstärker, in diesem Fall den Verstärker 10, durch Schließen des nachgeordneten Schalters, in diesem Fall des Schalters 18, auf den allen Photodioden gemeinsamen Signalausgang 9 gegeben. Beim Zeitpunkt des Auslesens der Information eines Doppelbildpunktes erfolgt die Rücksetzung der Photodioden für den vorhergehenden Doppelbildpunkt. Dies bedeutet, daß die Schalter 18, 19, 20 usw. sowie 13, 14 usw. durch das Schieberegister 1 seriell geschlossen werden, und zwar in der Weise, daß jeweils beim Schließen eines der Schalter 18, 19, 20 usw. der vorhergehende Schalter 13, 14, 15 usw. geschlossen wird. Wird beispielsweise der Schalter 19 geschlossen, so wird zusammen mit diesem der Schalter 13 geschlossen.

Die beiden Photodioden 5, 6 usw., die benachbart in Bewegungsrichtung 16 zueinander liegen, besitzen zweckmäßigerweise gleiche Übertragungscharakteristik.

Die Fig. 2 zeigt, daß auf einem Substrat eine Elektrodenmatrix mit zwei Zeilenelektroden 21, 22 und einer Reihe von Spaltenelektroden 23, 24, 25 usw. vorhanden ist. Zwischen den Zeilenelektroden 21, 22 und den Spaltenelektroden 23, 24, 25 usw. liegt eine a-Si:H-Schicht, die auf den Spaltenelektroden 23, 24, 25 usw. großflächig aufgebracht und durch die großflächigen, lichtdurchlässigen Zeilenelektroden 21, 22, z.B. aus ITO, abgedeckt ist. Die Größe eines Bildpunktes wird durch die geometrische Größe der Spaltenelektroden 23, 24, 25, an denen z.B. auch die Signalabnahme erfolgt, gebildet. Durch Anordnung der beiden Zeilenelektroden 21, 22, z.B. aus ITO, senkrecht zu den Grundelektroden 23, 24, 25 usw. bzw. parallel zur Zeilenrichtung wird eine Reihe von Doppelbildpunkt-Photodioden gebildet. An die Anschlüsse 26, 27 der beiden Zeilenelektroden 21, 22 werden in bezug auf die Spaltenelektroden 23, 24, 25 entgegengesetzte Potentiale entsprechend der Fig. 1 angelegt.

Die Fig. 1 und 2 zeigen, daß die Erzeugung eines Differenzsignales für die Bildpunktinformationen zweier in Bewegungsrichtung 16 benachbarter Bildpunkte durch den Aufbau des gesamten Bildaufnahmesensors bereits bei der Abtastung mit Hilfe einer Reihe von Doppelbildpunkt-Photodioden erfolgt. In der nachgeschalteten Signalaufbereitungsschaltung ist also eine solche Differenzbildung nicht mehr erforderlich.

In der Fig. 2 liegt die Photodiode 5 zwischen den Elektroden 23 und 26 und die Photodiode 6 zwischen den Elektroden 23 und 27. Die gemeinsame Elektrode 17 in Fig. 1 entspricht der Elektrode 23 in Fig. 2.

## Ansprüche

1. Zeilenförmiger Bildaufnahmesensor zum Abtasten einer optischen Information durch Relativbewegung zwischen dem Informationsträger und dem Bildaufnahmesensor, mit Photodioden (5, 6), denen eine Signalaufbereitungsschaltung (10, 11, 12) nachgeschaltet ist, **dadurch gekennzeichnet, daß** zwei parallele Reihen von Photodioden (5, 6) vorhanden sind, die senkrecht zur Bewegungsrichtung (16) liegen, und daß zwei benachbarte Photodioden (5, 6) der beiden Reihen eine gemeinsame Elektrode (17) besitzen, an der das der Signalaufbereitungsschaltung (10, 11, 12) zugeführte Differenzsignal der Beleuchtung der beiden benachbarten Photodioden (5, 6) abgegriffen ist.

2. Bildaufnahmesensor nach Anspruch 1, **dadurch gekennzeichnet, daß** jeweils zwei benachbarte Photodioden (5, 6) an entgegengesetzten Versorgungspotentialen, bezogen auf die gemeinsame Elektrode (17), liegen.

3. Bildaufnahmesensor nach Anspruch 1 oder 2, **dadurch gekennzeichnet, daß** jeweils zwei benachbarte Photodioden (5, 6) gleiche Übertragungscharakteristik besitzen.

4. Bildaufnahmesensor nach einem der Ansprüche 1 bis 3, **dadurch gekennzeichnet, daß** die Photodioden (5, 6) aus a-Si:H gebildet sind.

5. Bildaufnahmesensor nach einem der Ansprüche 1 bis 4, **dadurch gekennzeichnet, daß** eine Elektrodenmatrix mit zwei Zeilenelektroden (21, 22) und einer Reihe von Spaltenelektroden (23, 24, 25) vorhanden ist, wobei zwischen den Zeilen- und Spaltenelektroden (2 bis 25) eine a-Si:H-Schicht liegt.

87 P 5109

FIG 1

FIG 2

| | |
|---|---|
| Europäisches Patentamt | EUROPÄISCHER RECHERCHENBERICHT |

Nummer der Anmeldung

EP 88 11 2904

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | IBM TECHNICAL DISCLOSURE BULLETIN, Band 23, Nr. 12, Mai 1981, Seiten 5601-5602, New York, US; T.H. DISTEFANO: "Integrated device for optical edge detection" * Insgesamt * ----- | 1 | H 04 N 1/40 |

RECHERCHIERTE SACHGEBIETE (Int. Cl.4)

H 04 N 1/00
G 06 K 7/00

Der vorliegende Recherchenbericht wurde für alle Patentansprüche erstellt

| Recherchenort | Abschlußdatum der Recherche | Prüfer |
|---|---|---|
| DEN HAAG | 25-11-1988 | HAZEL J.F. |